# EUROPEAN PATENT APPLICATION

(11) **EP 2 899 631 A1**
(43) Date of publication of application: **29.07.2015**
(21) Application number: 13839276.6
(22) Date of filing: 10.07.2013
(51) Int. Cl.: G06F 9/445, H04B 1/04

(54) **TRANSMITTER AND METHOD FOR STARTING UP TRANSMITTER**

(30) Priority: 18.09.2012 JP 2012204389
(71) Applicant: Kabushiki Kaisha Toshiba, Minato-ku Tokyo 105-8001 (JP)
(72) Inventor: MATSUSHITA, Kenichi, Tokyo 105-8001 (JP)
(74) Representative: Hoffmann Eitle
(86) International application number: PCT/JP2013/004264
(87) International publication number: WO 2014/045501

(57) **Abstract**

A transmission device includes an internal device for transmitting a broadcast signal includes a nonvolatile memory, an internal device control section and a CPU. The nonvolatile memory holds setting information about the internal device. The internal device control section reads the setting information from the nonvolatile memory upon power on and controls the internal device on the basis of the setting information. The CPU boots up an OS (Operating System) upon the power on.

## Description

### Cross-references to related applications

This application is based upon and claims the benefit of priority from the prior Japanese Patent Application No. 2012-204389, filed on September 18, 2012, the entire contents of which are incorporated herein by reference.

### Technical Field

An embodiment of the present invention relates to a transmission device used for a system such as a broadcast system, and relates to an activation method of the transmission device.

### Background Art

In general, in a transmission device used for broadcasting of terrestrial digital television broadcast and the like, a control device centrally controls each unit portion provided in the transmission device.

The transmission device used for broadcasting plays an important role as a social infrastructure that conveys information. For this reason, the transmission device is provided with various countermeasures so as not to stop transmission of a broadcast wave. Then, once a failure occurs, the transmission device needs to solve the problem in a short time and to recover transmission of the broadcast wave.

A control device provided in a conventional transmission device controls each unit portion of the transmission device after the OS (Operating System) used by the CPU (Central Processing Unit) boots up. Therefore, when the control device is powered off because of some reason, the user needs to wait for the activation of the control device until the OS boots up after the control device is turned on again. For example, the user needs to wait for several minutes until the OS boots up.

### Citation List

### Patent Literature

Patent Literature 1: Publication of Japanese Patent Laid-Open No. 2009-259076

### Summary of Invention

### Technical Problem

In a conventional transmission device, when the user reactivates the transmission device, the user has to wait until the OS used by the CPU of the control device boots up after the power is once turned off and the power is turned on again.

It is an object of the present invention to provide a transmission device capable of being activated in a shorter time than a conventional transmission device, and to provide an activation method of the transmission device.

### Solution to Problem

According to the present embodiment, a transmission device includes an internal device configured to execute processing for transmitting a broadcast signal, a memory configured to hold setting information about the internal device, a main control unit configured to boot up an OS (Operating System) upon power on, and an auxiliary control unit configured to read the setting information from the memory upon the power on, and to control the internal device on the basis of the setting information.

### Advantageous Effects of Invention

A transmission device according to the present embodiment can be activated in a shorter time than a conventional transmission device.

### Brief Description of Drawings

Fig. 1 is a block diagram illustrating a configuration of a transmission device according to the present embodiment.
Fig. 2 is a block diagram illustrating a configuration of a control device as shown in Fig. 1.
Fig. 3 is a sequence diagram illustrating an activation method of the transmission device according to the present embodiment.

### Description of Embodiments

Hereinafter, an embodiment will be explained with reference to drawings.

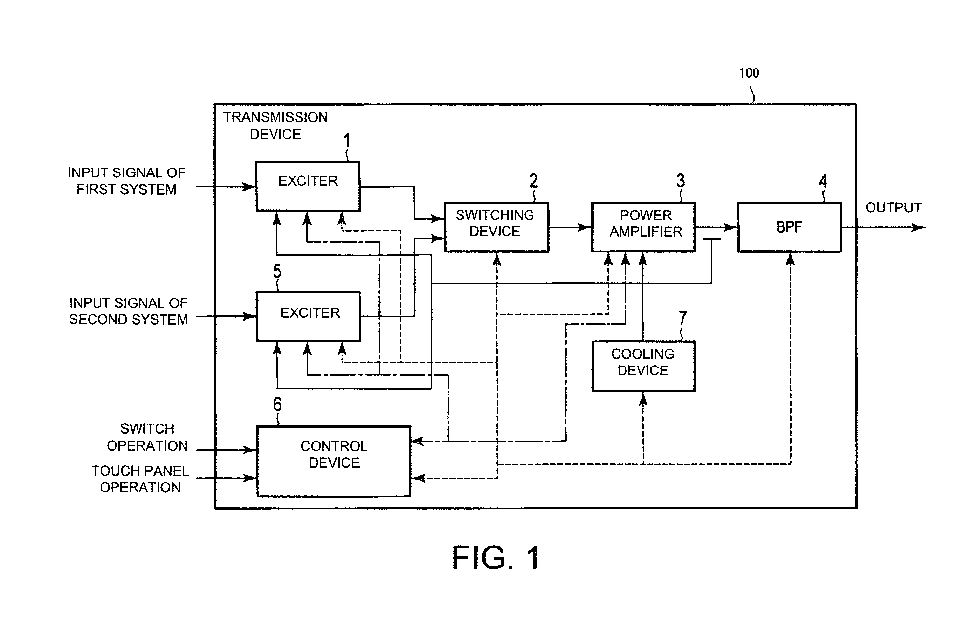

Fig. 1 is a block diagram illustrating a configuration of a transmission device according to the present embodiment. Fig. 1 illustrates an example of a configuration of a transmission device, and the transmission device according to the present invention is not limited to the configuration as shown in Fig. 1.

A transmission device 100 as shown in Fig. 1 includes an exciter 1, an exciter 5, a switching device 2, a power amplifier (PA: Power Amplifier) 3, a BPF (band pass filter) 4, a control device 6, and a cooling device 7.

The transmission device 100 receives an input signal of the first system and an input signal of the second system. These signals are signals of digital broadcast signal and the like.

The input signal of the first system is input into the exciter 1, and the exciter 1 modulates the input signal into a predetermined broadcast method, and outputs the modulated output signal. The output signal of the exciter 1 is provided via the switching device 2 to the power amplifier 3. Then, the electric power of the output signal of the exciter 1 is amplified by the power amplifier 3 to a predetermined level, and the amplified signal is output via the BPF 4, and is transmitted as a transmission signal by an antenna and the like.

The input signal of the second system is input into the exciter 5, and the exciter 5 modulates the input signal into a predetermined broadcast format, and outputs the modulated output signal. The output signal of the exciter 5 is provided via the switching device 2 to the power amplifier 3. Then, the electric power of the output signal of the exciter 5 is amplified by the power amplifier 3 to a predetermined level, and the amplified signal is output via the BPF 4, and is transmitted as a transmission signal by an antenna and the like.

It should be noted that the power amplifier 3 generates heat during electric power amplification, and therefore, the power amplifier 3 is cooled by the cooling device 7.

The exciter 1 modulates the input signal of the first system into a predetermined broadcast method. At this occasion, the exciter 1 detects a nonlinear distortion component from a signal between the power amplifier 3 and the BPF 4, and reduces the nonlinear distortion component by adding a nonlinear distortion compensation signal to the modulation signal (input signal).

The exciter 5 modulates the input signal of the second system into a predetermined broadcast method. At this occasion, the exciter 5 detects a nonlinear distortion component from a signal between the power amplifier 3 and the BPF 4, and reduces the nonlinear distortion component by adding a nonlinear distortion compensation signal to the modulation signal (input signal).

In this transmission device 100, one of the output signal of the exciter 1 and the output signal of the exciter 5 is selected by the switching device 2, and is input into the power amplifier 3. More specifically, in the embodiment, for example, the exciter 1 can be used as the exciter of the main system, and the exciter 5 can be used as the exciter of the backup system. The selection of the exciter 1 and the exciter 5 made by the switching device 2 is performed by the control of the control device 6.

The control device 6 controls the internal device installed in the transmission device 100. The internal device is, for example, the exciters 1, 5 and the power amplifier 3. The internal device executes processing for transmitting a broadcast signal under the control of the control device 6. Hereinafter, the control device 6 will be explained in details.

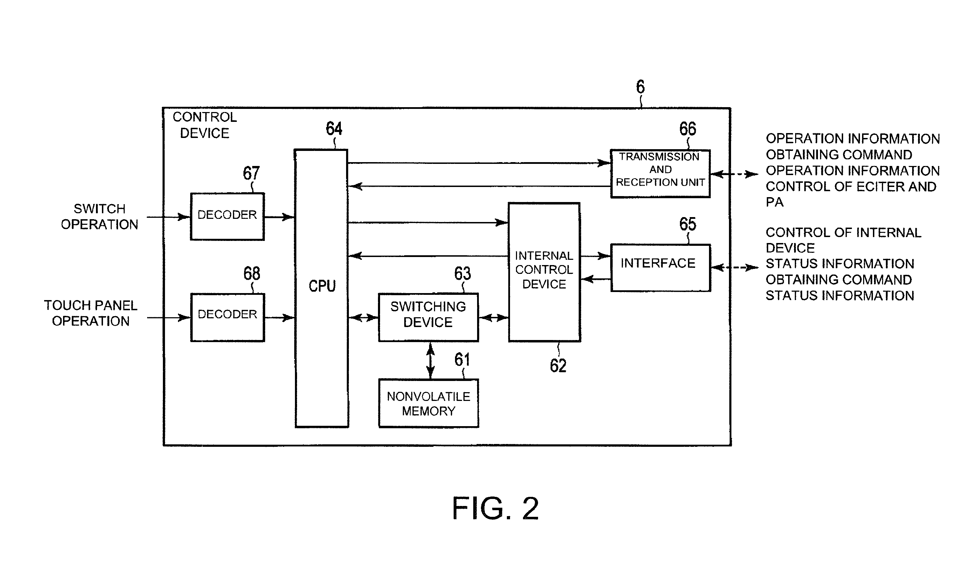

Fig. 2 is a block diagram illustrating a configuration of the control device 6 as shown in Fig. 1.

The control device 6 includes a nonvolatile memory 61, an internal device control unit 62, a switching device 63, a CPU 64, an interface 65, a transmission and reception section 66, and decoders 67, 68.

The nonvolatile memory 61 holds setting information about the internal device in advance. The setting information is numerical value information of parameter information and the like that is set in the internal device. The setting information may be held in the nonvolatile memory 61 after a previous operation of the transmission device in accordance with a command of the internal device control section 62, or may be held in the nonvolatile memory 61 separately from the operation of the transmission device.

The internal device control section 62 is formed with a hardware logic circuit, for example, an FPGA (Field Programmable Gate Array). The internal device control section 62 operates as an auxiliary control section, and controls the internal device. The internal device control section 62 reads setting information from the nonvolatile memory upon power on, and controls the internal device on the basis of the setting information.

First, when the control device 6 receives power on operation for turning on the power switch, the electric power is provided to each section of the control device 6. When the electric power is provided, the internal device control section 62 starts operation. More specifically, upon power-on in response to the power on operation, the internal device control section 62 starts operation. The internal device control section 62 outputs, to the switching device 63, a connection destination designation command indicating that the connection destination is the internal device control section 62. When the switching device 63 receives the connection destination designation command, the switching device 63 establishes a connection between the nonvolatile memory 61 and the internal device control section 62. Then, the internal device control section 62 accesses the nonvolatile memory 61 via the switching device 63, and obtains the setting information about the internal device held in the nonvolatile memory 61.

The internal device control section 62 transmits a status information obtaining command to the internal device via the interface 65 on the basis of the setting information about the internal device thus obtained, and obtains status information including ON information and abnormality detection information such as an alarm which are output from the internal device. The internal device control section 62 refers to the obtained status information to determine whether the internal devices are abnormal or not, and thus detecting the abnormality of the internal device.

When abnormality is detected in any one of the internal devices, the internal device control section 62 uses an internal device of the backup system instead of the internal device in which the abnormality is detected, or outputs an alarm to warn a user. For example, the exciter 5 is used instead of the exciter 1 in which abnormality is detected. When no abnormality is detected in any of the internal devices, the internal device control section 62 performs operation start control of the internal device, thus causing the internal device to operate.

After the internal device is operated, the internal device control section 62 outputs a connection destination designation command indicating that the connection destination is the CPU 64 to the switching device 63. When the switching device 63 receives the connection destination designation command, the switching device 63 establishes a connection between the nonvolatile memory 61 and the CPU 64. Accordingly, the CPU 64 accesses the nonvolatile memory 61 via the switching device 63, and obtains setting information about the internal device held in the nonvolatile memory 61.

When the internal device operates in a stable manner, i.e., when the internal device operates in a steady state, the internal device control section 62 obtains status information which is output from the internal device. The internal device control section 62 refers to the obtained status information to determine whether the internal devices are abnormal or not. When abnormality is detected in any one of the internal devices, the internal device control section 62 uses an internal device of the backup system instead of the internal device in which the abnormality is detected, or outputs an alarm to warn a user.

The switching device 63 establishes a connection between the designated connection destination and the nonvolatile memory 61 on the basis of the connection destination designation command sent from the internal device control section 62. More specifically, when the switching device 63 receives a connection destination designation command indicating that the connection destination is the internal device control section 62, the switching device 63 establishes a connection between the nonvolatile memory 61 and the internal device control section 62. When the switching device 63 receives a connection destination designation command indicating that the connection destination is the CPU 64, the switching device 63 establishes a connection between the nonvolatile memory 61 and the CPU 64.

The CPU 64 operates as the main control unit. The CPU 64 boots up the OS, and checks whether the internal device is operating in the steady state. When the control device 6 receives a power on operation for turning on the power switch, and electric power is provided to the CPU, then the CPU 64 starts operation, and starts the booting up of the OS to be used. More specifically, upon power on, the main control unit boots up the OS.

Upon completion of booting up the OS, the CPU 64 accesses the nonvolatile memory 61 via the switching device 63, and obtains setting information about the internal device held in the nonvolatile memory 61. The CPU 64 transmits an operation information obtaining command to the internal device, for example, the exciters 1, 5 and the power amplifier 3 on the basis of the obtained setting information about the internal device via the transmission and reception section 66, and obtains operation information which is output from the exciters 1, 5 and the power amplifier 3 in accordance with the operation information obtaining command. It should be noted that the operation information is the temperature, the electric current, the voltage, and the like of the exciters 1, 5 and the power amplifier 3, and is numerical value information measured by sensors and the like provided in each of the exciters 1, 5 and the power amplifier 3. The CPU 64 refers to the operation information to monitor whether the operation state of the internal device is steady or not.

When the internal device is operating in the steady state, the CPU 64 transmits a setting command of a setting of the amount of compensation of the exciters 1, 5 and a setting of a predetermined signal level of the power amplifier 3 to the exciters 1, 5 and the power amplifier 3 on the basis of a switch operation and a touch panel operation which is input by the user via the decoders 67, 68. More specifically, the CPU 64 controls the exciters 1, 5 and the power amplifier 3.

The interface 65 connects the internal device control section 62 and the internal device, and relays communication between the internal device control section 62 and the internal device.

The transmission and reception section 66 is, for example, an RS-485 transceiver. The transmission and reception section 66 connects the CPU 64 and the internal device, for example, the exciters 1, 5 and the power amplifier 3, and transmits a command from the CPU 64 to the exciters 1, 5 and the power amplifier 3 by means of serial communication of RS-485. It should be noted that the command from the CPU 64 in the present embodiment is the operation information obtaining command and the setting command described above. The transmission and reception section 66 receives the operation information which is output from the exciters 1, 5 and the power amplifier 3. It should be noted that the connection between transmission and reception section 66 and the exciters 1, 5 and the power amplifier 3 may be either wired connection or wireless connection.

Subsequently, operation according to the above configuration will be explained.

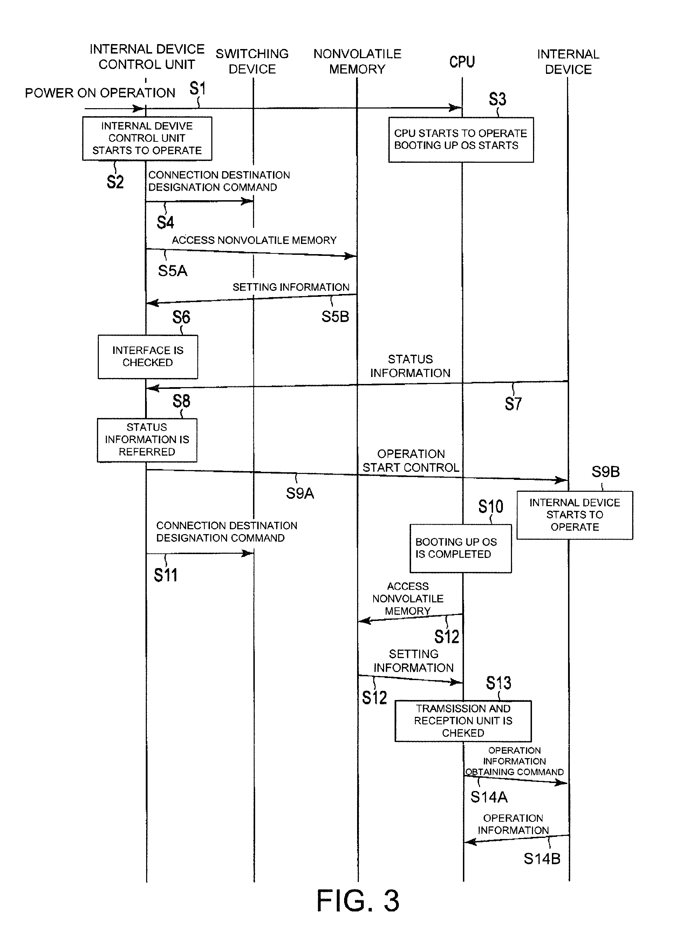

Fig. 3 is a sequence diagram illustrating an activation method of the transmission device according to the present embodiment.

First, when the power is turned on with the power on operation (step S1), the internal device control section 62 starts operation (step S2), and the CPU 64 starts operation, and starts booting up the OS to be used (sequence S3).

Subsequently, the internal device control section 62 outputs a connection destination designation command indicating that the connection destination is the internal device control section 62 to the switching device 63 (step S4). On the basis of this connection destination designation command, the switching device 63 establishes connection between the nonvolatile memory 61 and the internal device control section 62. Then, internal device control section 62 accesses the nonvolatile memory 61 via the switching device 63 (step S5A), and obtains the setting information about the internal device from the nonvolatile memory 61 (step S5B).

The internal device control section 62 checks whether there is input and output with the interface 65 (step S6). When there is an input signal to the interface 65, the internal device control section 62 transmits a status information obtaining command to internal device (the exciters 1, 5 and the power amplifier 3) on the basis of the setting information about the internal device. The internal device transmits status information to the internal device control section 62, and the internal device control section 62 obtains the status information from the internal device (step S7). In this case, the internal device control section 62 refers to the obtained status information to determine whether the internal devices are abnormal or not.

When abnormality is detected in any one of the internal devices, the internal device control section 62 uses an internal device of the backup system instead of the internal device in which the abnormality is detected, or outputs an alarm to warn a user (step S8). When no abnormality is detected in any of the internal devices, the internal device control section 62 performs operation start control of the internal device via the interface 65 (step S9A). Therefore, the internal device starts to operate (sequence S9B).

After the operation of the internal device is started, the CPU 64 completes the booting up of the OS (step S10). The internal device control section 62 outputs a connection destination designation command indicating that the connection destination is the CPU 64 to the switching device 63 (step S11). The switching device 63 establishes a connection between the nonvolatile memory 61 and the CPU 64 on the basis of the connection destination designation command. The CPU 64 accesses the nonvolatile memory 61 via the switching device 63 (step S12A), and obtains the setting information about the internal device from the nonvolatile memory 61 (step S12B). The CPU 64 checks whether there is an input and output with the transmission and reception section 66 (step S13). When there is an input signal to the transmission and reception section 66, the CPU 64 transmits an operation information obtaining command to the exciters 1, 5 and the power amplifier 3 on the basis of the obtained setting information about the internal device via the transmission and reception section 66 (step S14A). The CPU 64 obtains the operation information which is output from the exciters 1, 5 and the power amplifier 3 in accordance with the operation information obtaining command (step S14B). The CPU 64 refers to the operation information to monitor whether the operation state of the internal device is a steady state or not.

By way of the above steps, the transmission device 100 is activated in the steady state.

As described above, in the transmission device 100 according to the embodiment, the control device 6 includes an internal device control section 62 and a CPU 64. The internal device control section 62 performs the operation start control of the internal device, and the CPU 64 starts booting up of the OS in parallel with the operation start control of the internal device with the internal device control section 62. The internal device control section 62 is formed with a hardware logic circuit, and therefore, the internal device control section 62 can start the operation of the internal device while the booting up of the OS by the CPU 64.

Therefore, the transmission device 100 according to the present embodiment can be activated in a shorter time than a conventional transmission device.

After the booting up of the OS is finished, the CPU 64 obtains the operation information from the internal device on the basis of the setting information held in the nonvolatile memory. Therefore, the CPU 64 refers to the obtained operation information to monitor whether the operation state of the internal device is a steady state or not. The CPU 64 can control the internal device on the basis of the setting of the internal device which is input by the user.

The internal device control section 62 obtains the status information which is output from the internal device. Therefore, the internal device control section 62 refers to the obtained status information to determine whether the internal device is abnormal or not. When abnormality is detected in any one of the internal devices, the internal device control section 62 switches the internal device in which the abnormality is detected to the internal device of the backup system, so that the internal device of the backup system can be used, or an alarm can be output to warn the user.

The internal device control section 62 obtains status information which is output from the internal device when the internal device is operating in the steady state. Therefore, while the internal device is operating in the steady state, the internal device control section 62 refers to the obtained status information to determine whether the internal devices are abnormal or not. When abnormality is detected in any one of the internal devices, the internal device control section 62 can switch the internal device from the main system to the backup system, or output an alarm to warn the user.

In the above embodiment, the transmission device receiving the input signals of the two systems has been described, but the embodiment can also be carried out in a transmission device receiving input signals of many systems.

In the transmission device according to the embodiment, each of the internal device control section 62 and the CPU 64 may be separately provided with a nonvolatile memory.

In the transmission device according to the above embodiment, although the internal device control section 62 outputs the connection destination designation command to the switching device 63, the CPU 64 may output a connection destination designation command to the switching device 63.

The embodiment of the present invention has been hereinabove explained, but this embodiment is presented as an example, and it is to be understood that the embodiment is not intended to limit the scope of the invention. This embodiment can be carried out in various other forms, and various kinds of omissions, replacements, and changes can be applied without deviating from the gist of the invention. The embodiment and the modifications thereof are included in the scope and the gist of the invention, and likewise, included in the invention described in claims and the equivalent range thereof.

### Reference Signs List

1, 5...exciter, 2...switching device, 3...power amplifier, 4...band pass filter (BPF), 6...control device, 61...nonvolatile memory, 62...internal device control section, 63...switching device, 64...CPU, 65...interface, 66...transmission and reception section, 67, 68...decoder, 7...cooling device, 100...transmission device.

## Claims

1. A transmission device comprising:
an internal device configured to execute processing for transmitting a broadcast signal;
a memory configured to hold setting information about the internal device;
a main control unit configured to boot up an OS (Operating System) upon power on;
an auxiliary control section configured to read the setting information from the memory upon the power on, and to control the internal device on the basis of the setting information.

2. The transmission device according to claim 1, wherein after the booting up of the OS is finished, the main control section outputs an operation information obtaining command to the internal device on the basis of the setting information held in the memory, obtains operation information which is output from the internal device in accordance with the operation information obtaining command, and monitors whether an operation state of the internal device is steady or not on the basis of the obtained operation information.

3. The transmission device according to claim 1, wherein the internal device transmits status information to the auxiliary control section, and the auxiliary control section determines whether the internal device is abnormal or not from the status information.

4. The transmission device according to claim 1, wherein the auxiliary control section is made of a hardware logic circuit.

5. An activation method of a transmission device used for the transmission device comprising an internal device executing processing to transmit a broadcast signal, the activation method comprising:
holding setting information about the internal device in the memory;
activating an auxiliary control section upon power on and reading the setting information from the memory, and controlling the internal device on the basis of the setting information; and
causing a main control unit to boot up an OS (Operating System) upon the power on.
